# EUROPÄISCHE PATENTSCHRIFT

(11) **EP 1 360 434 B1**
(45) Veröffentlichungstag und Bekanntmachung des Hinweises auf die Patenterteilung: **13.04.2005**
(21) Anmeldenummer: 02710026.2
(22) Anmeldetag: 24.01.2002
(51) Int. Cl.: F16K 27/02, F16K 31/06, F15B 13/044, F15B 13/04

(54) **INSBESONDERE ELEKTROMAGNETISCH DIREKT BETÄTIGTES WEGE-SITZVENTIL IN PATRONENBAUWEISE**
CARTRIDGE-TYPE ESPECIALLY ELECTROMAGNETICALLY DIRECTLY ACTUATED DIRECTIONAL SEAT VALVE
DISTRIBUTEUR A SIEGE DE TYPE CARTOUCHE, A COMMANDE DIRECTE, NOTAMMENT ELECTROMAGNETIQUE

(30) Priorität: 16.02.2001 DE 10106429
(43) Veröffentlichungstag der Anmeldung: 12.11.2003
(73) Patentinhaber: Bosch Rexroth AG, 97816 Lohr am Main (DE)
(72) Erfinder: ROTT, Horst, 97753 Karlstadt (DE)
(86) Internationale Anmeldenummer: PCT/EP2002/000680
(87) Internationale Veröffentlichungsnummer: WO 2002/068848

(56) Entgegenhaltungen:
- DE-A- 3 621 559
- DE-A- 4 301 308
- DE-A- 19 945 183
- DE-B- 1 207 169
- US-A- 4 099 450

## Beschreibung

Die Erfindung betrifft ein elektromagnetisch direkt betätigtes Wege-Sitzventil, das als Ventilpatrone ausgebildet ist und das die Merkmale aus dem Oberbegriff des Patentanspruchs 1 aufweist.

Wege-Sitzventile dieser Art sind aus der Praxis sowie aus Prospektmaterial verschiedener Unternehmen bekannt. Beispielsweise ist ein gattungsgemäßes 3/2 Wege-Sitzventil in der Produktinformation "Herion-Informationen 1/87 Hydraulik", Seite 73, der Firma Herion gezeigt. Bei diesem Sitzventil ist der Ventilkolben so in einer durchgehenden Ventilbohrung der Ventilhülse angeordnet, daß sein Kolbenkegel am weitesten von dem Elektromagneten, mit dem die Ventilhülse zusammengebaut ist, entfernt ist. Zum Elektromagneten hin folgt auf den Kolbenkegel eine Kolbenhals, an dem entlang ein Durchflußquerschnitt zwischen einer Sitzkante und mehreren in die Ventilbohrung mündenden Querbohrungen besteht. An den Kolbenhals schließt sich ein Dichtabschnitt an, der den Fluidraum um die Mündung der Querbohrungen gegen den Raum vor der magnetseitigen Mündung der Ventilbohrung abdichtet. Dieser Fluidraum ist über eine durch den Ventilkolben hindurchgehende Axialbohrung mit einem Anschlußbereich vor der dem Elektromagneten abgewandten, vorderen Stirnseite der Ventilhülse verbunden. Somit wird der Ventilkolben, dessen Dichtquerschnitt im Bereich des Dichtabschnitts gleich dem Sitzquerschnitt ist, an gleich großen Flächen von demselben Druck nach entgegengesetzten Richtungen beaufschlagt und ist druckausgeglichen.

In der Produkinformation sind die Sitzventile in einem vereinfachten Längsschnitt gezeigt. Beim 3/2 Wege-Sitzventil befindet sich der Ventilkolben mit seinem Kolbenkegel, dessen Durchmesser größer als der Sitzdurchmesser ist, zwischen zwei Sitzkanten, die unmittelbar an der Ventilhülse ausgebildet sind. Natürlich läßt sich so der Ventilkolben nicht montieren. Vielmehr muß zumindest die der vorderen Stirnseite der Ventilhülse nähere Sitzkante an einer in die Ventilhülse eingesetzten Buchse, die als Ventilsitz bezeichnet sei, ausgebildet sein.

Bei einem 2/2 Wege-Sitzventil mit einem einen Kolbenkegel, einen Kolbenhals und einen Dichtabschnitt aufweisenden Ventilkolben ist es von der Art der Montage her nicht unbedingt notwendig, daß sich die Sitzkante an einem separaten, in die Ventilhülse eingesetzten Ventilsitz befindet. Grundsätzlich kann auch die Ventilhülse selbst die Sitzkante haben. Nachteilig ist dann jedoch, daß bei der Montage der Dichtabschnitt mit der Dichtung über die Sitzkante geschoben werden muß. Nachteilig ist auch, daß das Material für die Ventilhülse und das Material für den Ventilsitz nicht optimal entsprechend den unterschiedlichen Anforderungen ausgewählt und behandelt werden kann. Insgesamt erscheint es deshalb auch bei einem 2/2 Wege- Sitzventil von Vorteil, wenn ein separater Ventilsitz in die Ventilhülse eingesetzt ist.

Vor allem bei gattungsgemäßen Wege-Sitzventilen kleiner Nenngrößen ist es schwierig, nahe an der vorderen Stirnseite in die Ventilhülse einen Ventilsitz einzubauen. Der Außendurchmesser der Ventilhülse nimmt von der hinteren Stirnseite zur vorderen Stirnseite üblicherweise in mehreren Stufen ab, so daß sich der Ventilsitz gerade in dem Bereich der Ventilhülse mit kleinstem Durchmesser befindet.

Der Erfindung liegt die Aufgabe zugrunde, ein 2/2 oder 3/2 Wege-Sitzventil mit den Merkmalen aus dem Oberbegriff des Patentanspruchs 1 so weiterzuentwikkein, daß es sehr klein bauend ausgebildet werden kann.

DE 1 207 163 B zeigt ein bekanntes 3/2 Wegesitzventil mit den Merkmalen des Oberbegriffs des Anspruchs 1.

Das angestrebte Ziel wird erfindungsgemäß dadurch erreicht, daß in Übereinstimmung mit dem kennzeichnenden Teil des Patentanspruchs 1 der Ventilsitz und der Ventilkolben derart angeordnet sind, daß sich von den Kolbenabschnitten der Dichtabschnitt am nähesten an der in Montagerichtung vorderen Stirnseite der Ventilhülse befindet. Bei einer solchen Anordnung nimmt die Ventilhülse den Ventilsitz und den Kolbenkegel des Ventilkolbens in einem Bereich auf, in dem sie einen verhältnismäßig großen Durchmesser hat, so daß sich der oder die Ventilsitze ohne weiteres von der hinteren Stirnseite aus in die Ventilhülse einsetzen lassen.

Vorteilhafte Ausgestaltungen eines erfindungsgemäßen direkt betätigten Wege-Sitzventils kann man den Unteransprüchen entnehmen.

Ist das Ventil ein 2/2 Wege-Sitzventil, so genügt es, wenn der Ventilkolben nur einen sich in der Ventilbohrung befindlichen Kolbenhals hat, der zwischen dem Kolbenkegel und dem Dichtabschnitt liegt. Bei einem 3/2 Wege-Sitzventil hat der Ventilkolben bevorzugt einen sich zwischen zwei voneinander beabstandeten Sitzkanten befindlichen Kolbenkegel und beidseits des Kolbenkegels jeweils einen Kolbenhals.

Der Dichtabschnitt des Ventilkolbens hat bei den bekannten gattungsgemäßen Ventilen auch eine Führungsfunktion. Diese wird bevorzugt auch bei einem erfindungsgemäßen Ventil beibehalten. Bei den bekannten Ventilen befindet sich zwischen der Angriffsstelle des Betätigungselements am Ventilkolben und dem Kolbenkegel der Dicht- und Führungsabschnitt, der vom Betätigungselement auf den Ventilkolben ausgeübte Querkräfte aufnehmen und vom Kolbenkegel fernhalten kann. Bei einem erfindungsgemäßen Ventil befindet sich der Dichtabschnitt, von der Angriffsstelle des Betätigungselements am Ventilkolben aus gesehen, jenseits des Kolbenkegels und eines Kolbenhalses. Vorteilhafterweise ist nun gemäß Patentanspruch 3 der Ventilkolben .eines erfindungsgemäßen Ventils innerhalb eines Kolbenhalses und damit nahe am Kolbenkegel geführt, so daß trotz ausgeübter Querkräfte der Kolbenkegel jeweils sehr exakt auf dem Ventilsitz aufsitzt. Besitzt der Ventilkolben einen Kolbenhals, der sich zur hinteren Stirnseite der Ventilhülse hin neben dem Kolbenkegel befindet, so ist bevorzugt gemäß Patentanspruch 4 der Ventilkolben in diesem Kolbenhals, also zwischen dem Kolbenkegel und der Angriffsstelle des Betätigungselements geführt.

Die Führung innerhalb eines Kolbenhalses sieht vorteilhafterweise wie in den Patentansprüchen 5 und 6 angegeben aus.

Bei Ventilen kleiner Bauweise sind insbesondere die radialen Abmessungen des Ventilkolbens sehr klein. Einen ganz besonders kleinen Durchmesser hat der Ventilkolben in einer Nut des Dicht- und Führungsabschnitts, die einen Dichtring und einen oder zwei Stützringe aufnimmt. Ein solch kleiner Ventilkolben kann nur mit Schwierigkeiten axial durchbohrt werden. Deshalb ist bevorzugt gemäß Patentanspruch 7 zum Druckausgleich am Ventilkolben eine fluidische Verbindung von einem Anschlußbereich des Ventils vor der vorderen Stirnseite der Ventilhülse zu beiden Stirnseiten des Ventilkolbens durch die Ventilhülse hergestellt. Dies ist insbesondere deshalb möglich, weil der Bereich der Ventilhülse kleinen Durchmessers erfindungsgemäß frei von einem eingesetzten Ventilsitz ist, so daß auch in dem erwähnten Bereich der Ventilhülse genügend Materialstärke für eine Verbohrung vorhanden ist. Die fluidische Verbindung läßt sich vorteilhafterweise gemäß Patentanspruch 8 realisieren.

Mehrere jeweils elektromagnetisch betätigte Ausführungsbeispiele eines erfindungsgemäßen Wege-Sitzventils sind in den Zeichnungen dargestellt. Anhand der Figuren dieser Zeichnungen wird die Erfindung nun näher erläutert.

Es zeigen
- Figur 1: ein erstes Ausführungsbeispiel, das ein stromlos offenes 2/2 Wege-Sitzventil mit einem drückenden Elektromagneten ist,
- Figur 1a: einen Querschnitt durch den Ventilkolben des ersten Ausführungsbeispiels,
- Figur 2: ein zweites Ausführungsbeispiel, das ein stromlos geschlossenes 2/2 Wege-Sitzventil mit einem ziehenden Elektromagneten ist,
- Figur 3: ein drittes Ausführungsbeispiel, das ein 3/2 Wege-Sitzventil mit einem drückenden Elektromagneten ist, und
- Figur 4: ein viertes Ausführungsbeispiel, das ein 3/2 Wege-Sitzventil mit einem ziehenden Elektromagneten ist.

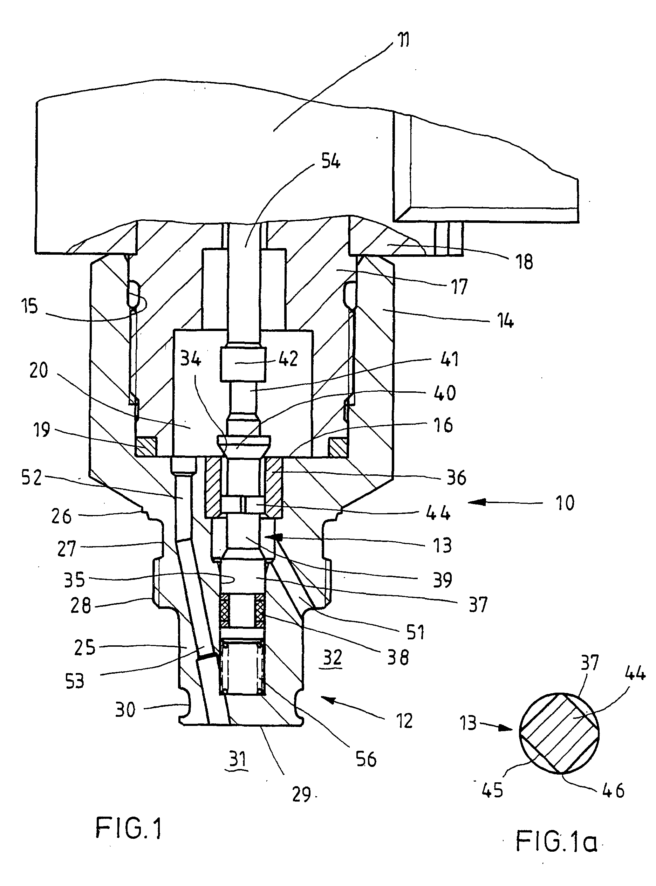

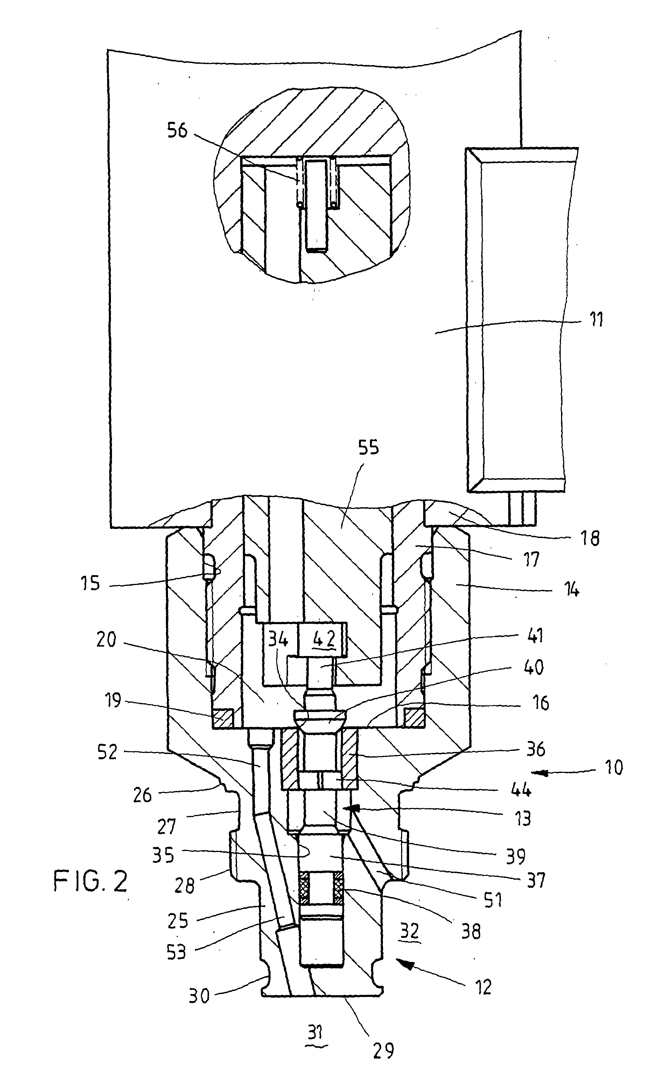

Die 2/2 Wege-Sitzventile nach den Figuren 1 und 2 setzen sich aus einem Hydraulikteil 10 und einem Elektromagneten 11 zusammen und sind als Einschraubpatronen ausgebildet. Der Hydraulikteil 10 besteht im wesentlichen aus einer Ventilhülse 12 und aus einem beweglichen Ventilkolben 13. Elektromagnet 11 und Ventilhülse 12 sind miteinander verschraubt. Dazu besitzt die Ventilhülse 12 einen Aufnahmeteil 14, der einen großen Außendurchmesser hat und in einer großen sacklochartigen Aufnahme 15 mit einem Boden 16 über eine gewisse Strecke mit einem Innengewinde versehen ist. Der Elektromagnet 11 hat ein Polrohr 17 und eine über das Polrohr geschobenen Spule 18. Das Polrohr ist in die Aufnahme 15 der Ventilhülse 12 bis zum Boden 16 eingeschraubt. Vor den ineinandergreifenden Gewinden von Polrohr und Ventilhülse liegt zwischen diesen beiden Teilen eine Dichtung 19, durch die ein einerseits vom Boden 16 der Aufnahme 15 und andererseits von den Wänden einer zum Boden hin offenen Aussparung im Polrohr 17 begrenzter Fluidraum 20 gegen Leckage über die Gewinde nach außen abgedichtet ist. Den Boden 16 kann man als hintere, dem Elektromagneten 11 zugewandte senkrecht auf der Achse der Ventilhülse stehende Stirnseite der Ventilhülse ansehen.

Vor dem Aufnahmeteil 14 hat die Ventilhülse 12 ein Steuerteil 25 mit gegenüber dem Außendurchmesser des Aufnahmeteils wesentlich kleineren radialen Abmessungen. Nur das Steuerteil 25 ist nach dem Einbau eines Ventils in ein Gehäuseteil von der entsprechenden Aufnahmebohrung aufgenommen. Vom Aufnahmeteil 14 geht die Ventilhülse konisch in das Steuerteil 25 über. Es befindet sich lediglich in der Ecke zwischen dem Steuerteil und der konischen Fläche eine kleine Stufe 26, die beim Einbau der Patrone in ein Gehäuseteil an diesem zur Anlage kommt.

In einem geringen Abstand zu der Stufe 26 ist in das Steuerteil 25 außen eine Ringnut 27 für eine nicht dargestellte Dichtung eingedreht, durch die die Aufnahmebohrung für die Einbaupatrone nach außen abgedichtet ist. Auf die Ringnut folgt eine Außengewinde 28, das dem Einschrauben der Patrone in ein Gehäuseteil dient. Nach dem Außengewinde setzt sich das Steuerteil 25 mit einem noch einmal verringerten Außendurchmesser bis zu einer vorderen senkrecht auf der Hülsenachse stehenden Stirnseite 29 fort. In einer Ringnut 30 kurz hinter der Stirnseite kann eine Dichtung aufgenommen werden. Durch diese wird nach dem Einbau der Patrone der die Ventilhülse umgebende Raum in einen im wesentlichen vor der Stirnseite 29 und damit axial vor der Ventilhülse liegenden axialen Anschlußbereich 31 und in einen radial außerhalb der Ventilhülse liegenden radialen Anschlußbereich 32 aufgeteilt.

Die Ventilhülse 12 weist eine in der Achse verlaufende Ventilbohrung 35 auf, die in den Fluidraum 20 mündet, während sie zur Stirnseite 29 hin verschlossen ist. Von ihrem Boden aus bis etwa zu dem Übergang zwischen der Ringnut 27 und dem Außengewinde 28 hat die Ventilbohrung 35 in einem ersten Abschnitt einen ersten Durchmesser, geht dann in eine Erweiterung als zweiten Abschnitt über, um schließlich über eine gewisse Strecke in einem dritten Abschnitt wieder den ersten Durchmesser zu haben und damit in den Fluidraum 20 zu münden. Diese letzte Strecke wird die Ventilbohrung 35 durch einen buchsenartigen Ventilsitz 36 gebildet, der von der Stirnseite 16 aus in die Ventilhülse 12 eingepreßt ist. Die stirnseitige Innenkante des Ventilsitzes 36 bildet die einzige gehäusefeste Sitzkante 34 des Ventils.

In der Ventilbohrung 35 ist der Ventilkolben 13 axial beweglich aufgenommen, der sich mit einem Dicht- und Führungsabschnitt 37, dessen Durchmesser gleich dem ersten Durchmesser der Ventilbohrung 35 ist, im wesentlichen in deren ersten Abschnitt befindet und darin in einer Nut eine Dichtung 38 aufweist, durch die der zweite, erweiterte Abschnitt der Ventilbohrung und der Raum zwischen dem Ventilkolben und dem Boden der Ventilbohrung gegeneinander abgedichtet sind. An den Abschnitt 37 schließt sich ein Kolbenhals 39 an, in dem der Durchmesser des Ventilkolbens 13 kleiner als der erste Durchmesser der Ventilbohrung ist und mit dem sich der Ventilkolben durch den erweiterten Abschnitt der Ventilbohrung und durch den Ventilsitz 36 hindurcherstreckt. Vor der Sitzkante 34 folgt auf den Kolbenhals ein Kolbenkegel 40, dessen Durchmesser größer als der erste Durchmesser der Ventilbohrung ist und mit dem der Ventilkolben 13 auf der Sitzkante 34 aufsitzen kann. Dem Kolbenkegel folgt ein sich in dem Fluidraum 20 befindlicher Verbindungsabschnitt 41, der in einem Teller 42 endet.

Etwa mittig des Kolbenhalses 39 und innerhalb des buchsenartigen Ventilsitzes 36 weist der Ventilkolben 13 einen kurzen Führungsbund 44 auf, der mit mehreren gleichmäßig über den Umfang verteilten Abflachungen 45 versehen ist, zwischen denen kreiszylindrische Teilflächen 46 verblieben sind, die innen am Ventilsitz 36 anliegen, so daß einerseits der Ventilkolben nahe am Kolbenkegel 40 geführt ist, andererseits aber auch ein Durchfluß von Fluid durch den Ventilsitz möglich ist.

In den erweiterten Abschnitt der Ventilbohrung 35 vor der einen Seite des Ventilsitzes 36 mündet eine durch die Ventilhülse 12 verlaufende Schrägbohrung 51, die außen zu dem radialen Anschlußbereich 32 offen ist und damit diesen Anschlußbereich fluidisch mit dem zwischen dem Dichtabschnitt 37 des Ventilkolbens 13 und der Sitzkante 37 liegenden Bereich der Ventilbohrung 35 verbindet. Der Fluidraum 20 ist über eine von der Stirnseite 16 der Ventilhülse 12 ausgehende Axialbohrung 52 und eine auf diese treffende, von der Stirnseite 29 ausgehende Schrägbohrung 53 fluidisch mit dem axialen Anschlußbereich 31 verbunden. Die Schrägbohrung 53 schneidet die Ventilbohrung 35 zwischen deren Boden und dem Dichtabschnitt 37 des Ventilkolbens 13 an. Damit steht an beiden Stirnseiten des Ventilkolbens derselbe Druck, nämlich der im axialen Anschlußbereich herrschende Druck an. Da außerdem der Durchmesser des Dichtabschnitts 37 gleich dem Durchmesser der Sitzkante 34 ist, ist der Ventilkolben druckausgeglichen, also keiner aus den anstehenden Drücken resultierenden Kraft ausgesetzt.

Soweit bisher beschrieben sind die beiden Ausführungsbeispiele nach den Figuren 1 und 2 völlig identisch zueinander. Unterschiedlich ist zunächst, daß bei dem Ausführungsbeispiel nach Figur 1 ein sogenannter drückender Elektromagnet, dessen nicht näher dargestellter Magnetanker sich bei Bestromung der Magnetspule in Richtung auf die Stirnseite 16 der Ventilhülse 12 zubewegt, und bei dem Ausführungsbeispiel nach Figur 2 ein sogenannter ziehender Elektromagnet verwendet wird, dessen Magnetanker 55 sich bei Bestromung der Magnetspule in Richtung von der Stirnseite 16 der Ventilhülse 12 wegbewegt. Am Magnetanker des drückenden Elektromagneten aus Figur 1 ist ein Stößel 54 befestigt, an dem der Ventilkolben 13 mit dem Teller 42 anliegt. Und zwar wird der Ventilkolben an dem Stößel durch eine Schraubendruckfeder 56 gehalten, die zwischen dem Ventilkolben 13 und dem Boden der Ventilbohrung 35 eingespannt ist und auf den Ventilkolben eine Kraft im Sinne eines Abhebens des Kolbenkegels 40 von der Sitzkante 34 ausübt. Im Unterschied zum Ausführungsbeispiel nach Figur 1 ist bei dem Ausführungsbeispiel nach Figur 2 der Ventilkolben 13 mit dem Teller 42 bajonettartig in eine Aussparung des Magnetankers des ziehenden Elektromagneten mit geringem Spiel in axialer Richtung eingehängt. Im Unterschied zu dem Ausführungsbeispiel nach Figur 1 ist außerdem bei dem Ausführungsbeispiel nach Figur 2 eine Schraubendruckfeder 56 nicht in der Ventilbohrung, sondern innerhalb des Elektromagneten angeordnet. Diese Schraubendruckfeder belastet den Magnetanker und damit den Ventilkolben 13 im Sinne eines Aufsitzens des Kolbenkegels 40 auf der Sitzkante 34 des Ventilsitzes 36.

Wenn bei dem Ausführungsbeispiel nach Figur 1 die Spule des Elektromagneten nicht an Spannung gelegt ist, hat die Druckfeder 56 den Ventilkolben von der Sitzkante 34 am Ventilsitz 36 abgehoben. Es kann Druckflüssigkeit sowohl vom axialen Anschlußbereich 31 über die Bohrungen 53 und 52, über den Fluidraum 20, über einen umlaufenden Durchflußquerschnitt zwischen der Sitzkante 34 und dem Kolbenkegel 40, entlang des Kolbenhalses 39 und über die Bohrung 51 zum radialen Anschlußbereich 32 als auch über denselben Pfad vom radialen Anschlußbereich 32 zum axialen Anschlußbereich 31 strömen.

Wird der Elektromagnet 11 mit Spannung versorgt, so bewegt der Magnetanker den Ventilkolben 13 gegen die Druckfeder 56 bis zum Aufsetzen des Kolbenkegels 40 auf der Sitzkante 34. Dann ist die fluidische Verbindung zwischen den beiden Anschlußbereichen in beiden Durchflußrichtungen gesperrt.

Das Ventil aus Figur 1 ist also ein elektromagnetisch betätigbares 2/2 Wege-Sitzventil, das stromlos offen ist.

Wenn bei dem Ausführungsbeispiel nach Figur 2 die Spule des Elektromagneten nicht an Spannung gelegt ist, drückt die Druckfeder 56 über den Magnetanker 55 den Ventilkolben 13 mit seinem Kolbenkegel 40 auf die Sitzkante 34, so daß kein Druckflüssigkeitsstrom zwischen den beiden Anschlußbereichen 31 und 32 möglich ist. Wird der Elektromagnet 11 mit Spannung versorgt, so hebt der Magnetanker den Ventilkolben 13 gegen die Kraft der Druckfeder 56 von der Sitzkante 34 ab. Dann kann zwischen den beiden Anschlußbereichen Druckflüssigkeit in beiden Durchflußrichtungen fließen.

Das Ventil aus Figur 2 ist also ein elektromagnetisch betätigbares 2/2 Wege-Sitzventil, das stromlos geschlossen ist.

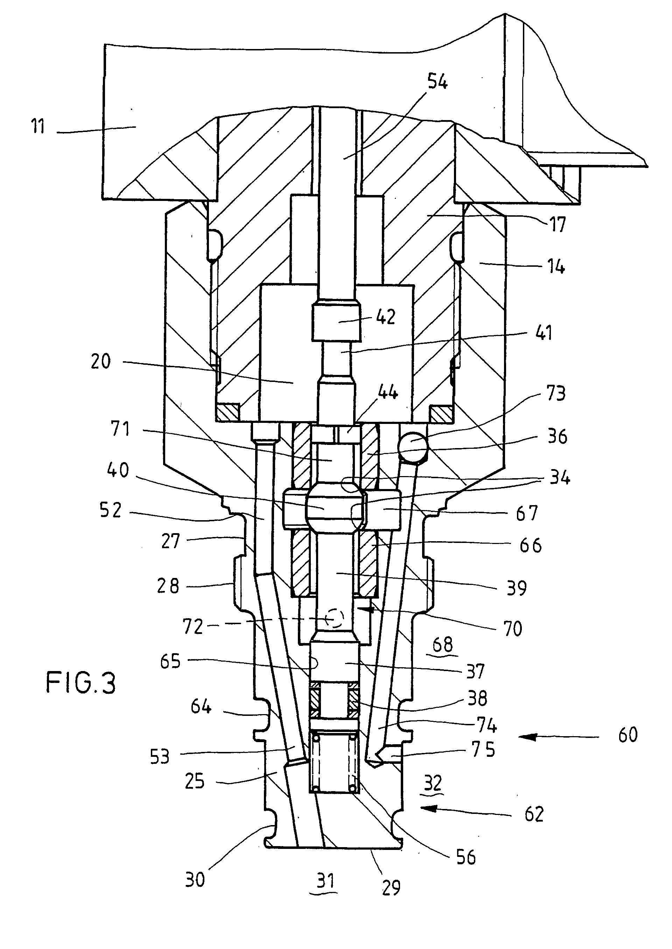

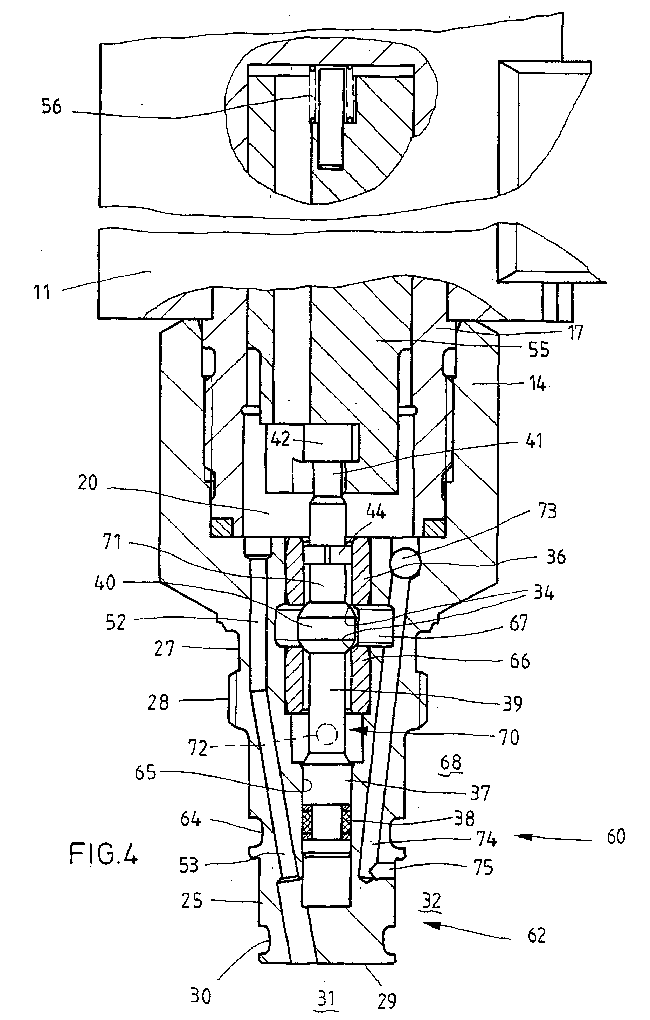

Für das 3/2 Wege-Sitzventil nach Figur 3 ist derselbe drückende Elektromagnet 11 wie für das 2/2 Wege-Sitzventil aus Figur 1 und für das 3/2 Wege-Sitzventil nach Figur 4 derselbe ziehende Elektromagnet 11 wie für das 2/2 Wege-Sitzventil aus Figur 2 verwendet. Die beiden Ventile nach den Figuren 3 und 4 unterscheiden sich nur in der Ausbildung des Hydraulikteils von den Ventilen nach den Figuren 1 und 2. Die Hydraulikteile 60 der beiden Ventile nach den Figuren 3 und 4 miteinander verglichen besteht nur in der Anordnung einer Schraubendruckfeder 56 ein Unterschied.

Die Ventilhülse 62 eines Ventils aus den Figuren 3 und 4 hat denselbe Aufnahmeteil 14 wie eine Ventilhülse 12 aus Figur 1 oder 2. Das Steuerteil 63 der Ventilhülse 62 dagegen ist länger als dasjenige einer Ventilhülse 12. Und zwar ist axial zwischen den Abschnitt mit der Ringnut 27 für eine Dichtung und mit dem Außengewinde 28 und den Abschnitt mit der Ringnut 30 für eine Dichtung ein weiterer Abschnitt eingefügt, dessen Außendurchmesser eine Größe zwischen den Außendurchmessern der beiden anderen Abschnitte hat und der eine Ringnut 64 für eine weitere Dichtung aufweist. Durch die weitere Dichtung ist radial außerhalb der Ventilhülse heben dem radialen Anschlußbereich 32 zwischen den sich in den Ringnuten 30 und 64 befindlichen Dichtungen ein weiterer radialer Anschlußbereich 68 zwischen der sich in der Ringnut 64 befindlichen Dichtung und dem Außengewinde 28 sowie der Dichtung in der Ringnut 27 geschaffen.

Die Ventilhülse 62 weist eine in der Achse verlaufende Ventilbohrung 65 auf, die in den wiederum durch die hintere Stirnseite 16 der Ventilhülse und das Polrohr 17 begrenzten Fluidraum 20 mündet, während sie zur vorderen Stirnseite 29 hin verschlossen ist. Von ihrem Boden aus bis in den zusätzlichen Abschnitt des Steuerteils 25 hinein hat die Ventilbohrung 65 in einem ersten Abschnitt einen ersten Durchmesser, geht dann in eine zentrische Erweiterung als zweiten Abschnitt über, wird dann in einem folgende Abschnitt, der wieder den ersten Durchmesser hat, durch einen ersten in die Ventilhülse 62 eingesetzten buchsenartigen Ventilsitz 66 gebildet, weist daran anschließend eine exzentrische Erweiterung 67 auf, um schließlich über eine gewisse Strecke in einem letzten Abschnitt wieder den ersten Durchmesser zu haben und damit in den Fluidraum 20 zu münden. Diese letzte Strecke wird die Ventilbohrung 65 wie bei den Ausführungsbeispielen aus den Figuren 1 und 2 durch den buchsenartigen Ventilsitz 36 gebildet, der identisch zu dem Ventilsitz 66 ist und von diesem einen der Breite der Erweiterung 67 entsprechenden Abstand hat. Es sind also nun zwei Ventilsitze vorhanden, deren Innenkanten an den einander und der Erweiterung 67 zugewandten Stirnseiten zwei Sitzkanten 34 sind.

In der Ventilbohrung 65 ist ein Ventilkolben 70 axial beweglich aufgenommen, der sich mit einem Dicht- und Führungsabschnitt 37, dessen Durchmesser gleich dem ersten Durchmesser der Ventilbohrung 65 ist, im wesentlichen in deren ersten Abschnitt befindet und darin in einer Nut eine Dichtung 38 aufweist, durch die der zweite, erweiterte Abschnitt der Ventilbohrung und der Raum zwischen dem Ventilkolben und dem Boden der Ventilbohrung gegeneinander abgedichtet sind. An den Abschnitt 37 schließt sich ein Kolbenhals 39 an, in dem der Durchmesser des Ventilkolbens 70 kleiner als der erste Durchmesser der Ventilbohrung ist und mit dem sich der Ventilkolben durch den zentrisch erweiterten Abschnitt der Ventilbohrung und durch den Ventilsitz 66 hindurcherstreckt. In der exzentrischen Erweiterung 67 folgt auf den Kolbenhals 39 ein Kolbenkegel 40, dessen Durchmesser größer als der erste Durchmesser der Ventilbohrung ist. Der Kolbenkegel 40 ist symmetrisch bezüglich einer senkrecht auf der Achse der Ventilhülse 62 stehenden Ebene ausgebildet. Mit ihm sitzt der Ventilkolben 13 mit Ausnahme der Schaltvorgänge auf der Sitzkante 34 entweder des Ventilsitzes 66 oder des Ventilsitzes 36 auf. Dem Kolbenkegel 40 folgt ein weiterer Kolbenhals 71, der durch den Ventilsitz 36 hindurch in den Fluidraum 20 hineinragt, und dem Kolbenhals 71 folgt schließlich der sich in dem Fluidraum 20 befindliche Verbindungsabschnitt 41, der in einem Teller 42 endet. Bei dem Ausführungsbeispiel nach Figur 3 liegt an diesem Teller 42 der Stößel 54 des drückenden Elektromagneten an. Bei dem Ausführungsbeispiel nach Figur 4 ist der Ventilkolben 70 mit dem Teller 42 in den Magnetanker 55 des Elektromagneten eingehängt.

In dem Kolbenhals 71 und innerhalb des buchsenartigen Ventilsitzes 36 weist der Ventilkolben 70 einen kurzen Führungsbund 44 auf, der mit mehreren gleichmäßig über den Umfang verteilten Abflachungen 45 (siehe Figur 1a) versehen ist, zwischen denen kreiszylindrische Teilflächen 46 verblieben sind, die innen am Ventilsitz 36 anliegen, so daß einerseits der Ventilkolben nahe am Kolbenkegel 40 geführt ist, andererseits aber auch ein Durchfluß von Fluid durch den Ventilsitz 36 möglich ist. Soweit der Ventilkolben 13 aus den Figuren 1 und 2 und der Ventilkolben 70 aus den Figuren 3 und 4 miteinander vergleichbare Abschnitte haben, sind diese mit gleichen Bezugszahlen versehen.

In den zentrisch erweiterten Abschnitt der Ventilbohrung 70 vor der einen Seite des Ventilsitzes 66 mündet eine durch die Ventilhülse 62 verlaufende Bohrung 72, die außen zu dem radialen Anschlußbereich 68 offen ist und damit diesen Anschlußbereich fluidisch mit dem zwischen dem Dichtabschnitt 37 des Ventilkolbens 70 und der Sitzkante 34 am Ventilsitz 66 liegenden Bereich der Ventilbohrung 65 verbindet. Über eine von der Stirnfläche 16 her eingebrachte und dorthin durch eine eingepreßte Kugel 73 verschlossene und die exzentrische Erweiterung 67 anschneidende Schrägbohrung 74 und ein auf diese treffende Radialbohrung 75 ist der radiale Anschlußbereich 32 fluidisch mit der Erweiterung 67 verbunden. Der Fluidraum 20 ist über eine von der Stirnseite 16 der Ventilhülse 12 ausgehende Axialbohrung 52 und eine auf diese treffende, von der Stirnseite 29 ausgehende Schrägbohrung 53 fluidisch mit dem axialen Anschlußbereich 31 verbunden. Die Schrägbohrung 53 schneidet die Ventilbohrung 65 zwischen deren Boden und dem Dichtabschnitt 37 des Ventilkolbens 70 an. Damit ist auch der Ventilkolben 70 der Ventile nach den Figuren 3 und 4 druckausgeglichen.

Soweit bisher beschrieben sind die Hydraulikteile 60 beiden Ausführungsbeispiele nach den Figuren 3 und 4 völlig identisch zueinander. Unterschiedlich ist, daß bei dem Ausführungsbeispiel nach Figur 3 zwischen dem Ventilkolben und dem Boden der Ventilbohrung eine Schraubendruckfeder 56 eingespannt ist, während diese Feder im Hydraulikteil des Ausführungsbeispiels nach Figur 4 fehlt. Vielmehr befindet sich hier die Schraubendruckfeder 56 im Elektromagneten 11 hinter dem Magnetanker 55 und hat entgegengesetzte Wirkrichtung.

Bei dem Ausführungsbeispiel nach Figur 3 drückt die Druckfeder 56 den Ventilkolben 70 mit dem Kolbenkegel 40 gegen die Sitzkante des Ventilsitzes 36, wenn der Elektromagnet nicht bestromt ist. Zwischen der Sitzkante des Ventilsitzes 66 und dem Kolbenkegel 40 besteht ein Durchflußquerschnitt. Somit kann Druckflüssigkeit vom radialen Anschlußbereich 32 über die Bohrungen 75 und 74, die exzentrische Erweiterung 67, den Durchflußquerschnitt zwischen dem Kolbenkegel 40 und dem Ventilsitz 66, entlang des Kolbenhalses 39, über die zentrische Erweiterung der Ventilbohrung auf der einen Seite des Ventilsitzes 66 und über die Bohrung 72 zum radialen Anschlußbereich 68 und umgekehrt strömen.

Wird der Elektromagnet an Spannung gelegt, wird der Ventilkolben 70 mit seinem Kolbenkegel 40 gegen die Kraft der Druckfeder 56 an den Ventilsitz 66 gedrückt. Nun kann Druckflüssigkeit vom radialen Anschlußbereich 32 über die Bohrungen 75 und 74, die exzentrische Erweiterung 67, den Durchflußquerschnitt zwischen dem Kolbenkegel 40 und dem Ventilsitz 36, entlang des Kolbenhalses 71, über den Fluidraum 20 und über die Bohrungen 52 und 53 zum axialen Anschlußbereich 31 und umgekehrt strömen.

Bei dem Ausführungsbeispiel nach Figur 4 sind die Durchflußmöglichkeiten bezüglich ein- und ausgeschaltetem Elektromagneten 11 im Vergleich zu dem Ausführungsbeispiel nach Figur 3 miteinander vertauscht. Dies ist unmittelbar einsichtig.

## Patentansprüche

1. Elektromagnetisch direkt betätigtes Wege-Sitzventil in Patronenbauweise
mit einer Ventilhülse (12, 62), an der außen zumindest zwei Anschlußbereiche (31, 32, 68) voneinander unterschieden sind und die eine axial verlaufende zu einer in Montagerichtung der Patrone hinteren Stirnseite (16) und zu einem Betätigungselement (11) hin offene Ventilbohrung (35, 65) aufweist, in die ein buchsenartiger Ventilsitz (36, 66) mit einer Sitzkante (34) eingesetzt ist und in die im Abstand zu der Sitzkante (34) eine zu einem Anschlußbereich (32, 68) nach außen offene Querbohrung (51, 72) mündet,
mit einem in der Ventilbohrung (35, 65) befindlichen druckausgeglichenen Ventilkolben (13, 70), der einstückig einen Kolbenkegel (40), der auf die Sitzkante (34) aufsetzbar ist, an den Kolbenkegel (40) sich auf der Seite der Sitzkante (34) anschließend einen sich im Bereich der Mündung der Querbohrung (51, 72) befindlichen Kolbenhals (39), an dem entlang ein Durchflußquerschnitt zwischen der Sitzkante (34) und der Querbohrung (51, 72) besteht, und an den Kolbenhals (39) anschließend einen an der Wand der Ventilbohrung (35, 65) dichtend anliegenden Dichtabschnitt (37) aufweist,
**dadurch gekennzeichnet,**
**daß** der Ventilsitz (36, 66) und der Ventilkolben (13, 70) derart angeordnet sind, daß sich von den Kolbenabschnitten der Dichtabschnitt (37) am nähesten an der in Montagerichtung vorderen Stirnseite (29) der Ventilhülse (12, 62) befindet.

2. Wege-Sitzventil nach Anspruch 1, **dadurch gekennzeichnet, daß** sich der Kolbenkegel (40) zwischen zwei voneinander beabstandeten Sitzkanten (34) befindet und der Ventilkolben (70) beidseits des Kolbenkegels (40) einen Kolbenhals (39, 71) aufweist.

3. Wege-Sitzventil nach Anspruch 1 oder 2, **dadurch gekennzeichnet, daß** der Ventilkolben (13, 70) innerhalb eines Kolbenhalses (39, 71) in der Ventilbohrung (35, 65) geführt ist.

4. Wege-Sitzventil nach den Ansprüchen 3, **dadurch gekennzeichnet, daß** der Ventilkolben (70) innerhalb desjenigen Kolbenhalses (71) in der Ventilbohrung (65) geführt ist, der sich zur hinteren Stirnseite (16) der Ventilhülse (62) hin neben dem Kolbenkegel (40) befindet.

5. Wege-Sitzventil nach Anspruch 3 oder 4, **dadurch gekennzeichnet, daß** der Ventilkolben (13, 70) an einem Kolbenhals (39, 71) einen vom Kolbenkegel (40) beabstandeten und eine dem Kolbenkegel (40) abgewandte Stirnfläche aufweisenden Führungsbund (44) besitzt, der an seinem Umfang wenigstens eine Durchflußaussparung hat.

6. Wege-Sitzventil nach Anspruch 5, **dadurch gekennzeichnet, daß** der Führungsbund (44) mehrere gleichmäßig über seinen Umfang verteilte Durchflußaussparungen aufweist.

7. Wege-Sitzventil nach einem vorhergehenden Anspruch, **dadurch gekennzeichnet, daß** sich ein Anschlußbereich (31) vor der vorderen Stirnseite (29) der Ventilhülse (12, 62) befindet und daß durch die Ventilhülse (12, 62) hindurch eine offene Fluidverbindung vor beide Stirnseiten des Ventilkolbens (13, 70) besteht.

8. Wege-Sitzventil nach Anspruch 7, **dadurch gekennzeichnet, daß** die Ventilbohrung (35, 65) eine zur vorderen Stirnseite (29) der Ventilhülse (12, 62) hin verschlossene Sackbohrung ist und daß die Sackbohrung zwischen ihrem Boden und dem Ventilkolben (13, 70) durch eine von der vorderen Stirnseite (29) der Ventilhülse (12, 62) ausgehende, schräg zur Achse der Ventilhülse verlaufende und in einer Fluidverbindung zum Raum (20) vor der Mündung der Ventilbohrung (35, 65) liegende Verbindungsbohrung (53) angeschnitten ist.

## Claims

1. A directional control valve which is operated directly and electromagnetically, of the cartridge type, having a valve sleeve (12, 62) on the outside of which at least two connecting areas (31, 32, 68) are different from one another and which has an axially running valve bore (35, 65) which is open towards an end face (16) which is at the rear in the installation direction of the cartridge and towards an operating element (11), and into which a bush-like valve seat (36, 66) having a seating edge (34) is inserted, and into which a transverse bore (51, 72) which is open on the outside towards a connecting area (32, 68) opens at a distance from the seating edge (34),
having a pressure-equalizing valve piston (13, 70) which is located in the valve bore (35,65) and which, integrally, has a piston cone (40), which can be placed on the seating edge (34), has a piston neck (39) which is located in the area of the mouth of the transverse bore (51, 72) adjacent to the piston cone (40) on the side of the seating edge (34) and along which piston neck (39) a flow cross section exists between the seating edge (34) and the transverse bore (51, 72), and, adjacent to the piston neck (39), has a sealing section (37) which rests on the wall of the valve bore (35,65), forming a seal,
**characterized by the fact that** the valve seat (36,66) and the valve piston (13,70) are arranged such that, of the piston sections, the sealing section (37) is located closest to that end face (29) of the valve sleeve (12,62) which is at the front in the installation direction.

2. A directional control valve according to claim 1, **characterized by** the fact that the piston cone (40) is located between two seating edges (34) which are at a distance from one another, and the valve piston (70) has a piston neck (39, 71) on both sides of the piston cone (40).

3. A directional control valve according to claim 1 or 2, **characterized by** the fact that the valve piston (13, 70) is guided within a piston neck (39, 71) in the valve bore (35,65).

4. A directional control valve according to claim 3, **characterized by** the fact that the valve piston (70) is guided in the valve bore (65) within that piston neck (71) which is located alongside the piston cone (40) towards the rear end face (16) of the valve sleeve (62).

5. A directional control valve according to claim 3 or 4, **characterized by** the fact that the valve piston (13,70) has on a piston neck (39, 71) a guide collar (44) which is at a distance from the piston cone (40), has one end surface facing away from the piston cone (40) and, on its circumference, has at least one flow cutout.

6. A directional control valve according to claim 5, **characterized by** the fact that the guide collar (44) has a plurality of flow cutouts which are distributed uniformly over its circumference.

7. A directional control valve according to any of the preceding claims, **characterized by** the fact that one connection area (31) is located in front of the front end face (29) of the valve sleeve (12, 62), and that, passing right through the valve sleeve (12, 62), there is an open fluid connection in front of both end faces of the valve piston (13,70).

8. A directional control valve according to claim 7, **characterized by** the fact that the valve bore (35, 65) is a blind bore which is closed towards the front end face (29) of the valve sleeve (12,62), and that the blind bore is intersected between its base and the valve piston (13,70) by a connecting bore (53) which originates from the front end face (29) of the valve sleeve (12,62), runs obliquely with respect to the axis of the valve sleeve, and lines in a fluid connection to the area (20) in front of the mouth of the valve bore (35,65).

## Revendications

1. Un distributeur à clapet en cartouche à actionnement direct par voie électromagnétique,
doté d'une chemise (12, 62) de valve, sur laquelle au mois deux zones (31, 32, 68) de raccordement se distinguent extérieurement et laquelle présente un alésage (35, 65) de valve orienté dans la direction axiale et ouvert sur une face (16) arrière, lorsque considérée dans le sens du montage de la cartouche, et sur un élément (11) d'actionnement, à l'intérieur de laquelle est inséré un siège (36, 66) de clapet en forme de douille pourvu d'une arête (34) de siège et dans laquelle débouche, à distance de l'arête (34) de siège, un alésage (51, 72) . transversal ouvert extérieurement sur une zone (32, 68) de raccordement,
doté d'un tiroir (13, 70) de valve à équilibrage de pression situé dans l'alésage (35, 65) de valve, qui en une seule pièce présente un cône (40) de tiroir, pouvant s'asseoir sur l'arête (34) de siège, un cou (39) de tiroir, s'adjoignant au cône (40) de tiroir du côté de l'arête (34) de siège, se trouvant dans la zone de débouchure de l'alésage (51, 72) transversal et le long duquel est maintenue une section de débit entre l'arête (34) de siège et l'alésage (51, 72) transversal, et un segment (37) d'étanchéité, s'adjoignant au cou (39) de tiroir et étant plaqué contre la paroi de l'alésage (35, 65) de valve de façon à faire étanchéité,
**caractérisé en ce que**
le siège (36, 66) de clapet et le tiroir (13, 70) de valve sont disposés de façon à ce que le segment (37) d'étanchéité est celui des segments de tiroir, qui est situé le plus prés de la face (29) avant, dans le sens du montage, de la chemise (12, 62) de valve.

2. Un distributeur à clapet selon la revendication n° 1, **caractérisé en ce que** le cône (40) de tiroir est disposé entre deux arêtes (34) de siège, distantes l'une de l'autre, et le tiroir (70) de valve présente un cou (39, 71) de tiroir de part et d'autre du cône (40) de tiroir.

3. Un distributeur à clapet selon la revendication n° 1 ou n° 2, **caractérisé en ce que** le tiroir (13, 70) de valve est guidé dans l'alésage (35, 65) de valve au niveau d'un cou (39, 71) de tiroir.

4. Un distributeur à clapet selon les revendications n° 3, **caractérisé en ce que** le tiroir (70) de valve est guidé dans l'alésage (65) de valve au niveau de celui des cous (71) de tiroir, qui est adjacent au cône (40) de tiroir dans le sens de la face (16) arrière de la chemise (62) de valve.

5. Un distributeur à clapet selon la revendication n° 3 ou n° 4, **caractérisé en ce que** le tiroir (13, 70) de valve possède, au niveau d'un cou (39, 71) de tiroir, une collerette (44) de guidage, qui est distante du cône (40) de tiroir, qui présente une face détournée du cône (40) de tiroir et qui, sur sa périphérie, présente au moins un évidement de débit.

6. Un distributeur à clapet selon la revendication n° 5, **caractérisé en ce que** la collerette (44) de guidage présente plusieurs évidements de débit régulièrement répartis le long de sa périphérie.

7. Un distributeur à clapet selon une revendication précédente, **caractérisé en ce qu'**une zone (31) de raccordement est disposée devant la face (29) avant de la chemise (12, 62) de valve et que, traversant la chemise (12, 62) de valve, une connexion par voie fluide ouverte raccorde devant les deux faces du tiroir (13, 70) de valve.

8. Un distributeur à clapet selon la revendication n° 7, **caractérisé en ce que** l'alésage (35, 65) de valve est un alésage en cul-de-sac fermé dans le sens de la face (29) avant de la chemise (12, 62) de valve et que, entre son fond et le tiroir (13, 70) de valve, l'alésage en cul-de-sac est coupé par un alésage (53) de raccordement, qui part de la face (29) avant de la chemise (12, 62) de valve, qui est orienté en biais par rapport à l'axe de la chemise de valve et qui est disposé dans une connexion fluide avec la chambre (20) située devant l'embouchure de l'alésage (35, 65) de valve.
